# FASCICULE DE BREVET EUROPEEN

(11) **EP 3 753 845 B1**
(45) Date de publication et mention de la délivrance du brevet: **16.11.2022**
(21) Numéro de dépôt: 20180379.8
(22) Date de dépôt: 16.06.2020
(51) Int. Cl.: B64C 25/50, B64D 45/00, B64F 1/22

(54) **ATTERRISSEUR D'AERONEF EQUIPE DE MOYENS D'ALERTE VISUELLE PERMETTANT DE SIGNALER UNE SURCOURSE ANGULAIRE D'UNE PARTIE INFERIEURE ORIENTABLE DE L'ATTERRISSEUR**
FAHRWERK EINES LUFTFAHRZEUGS, DAS MIT VISUELLEN ALARMANZEIGEMITTELN AUSGESTATTET IST, DIE ZUR SIGNALISIERUNG EINER WINKELÜBERAUSLENKUNG EINES AUSRICHTBAREN UNTEREN TEILS DES FAHRWERKS DIENEN
AIRCRAFT LANDING GEAR PROVIDED WITH A MEANS FOR VISUAL WARNING INDICATING ANGULAR OVERTRAVEL OF A STEERABLE LOWER PORTION OF THE LANDING GEAR

(30) Priorité: 19.06.2019 FR 1906614
(43) Date de publication de la demande: 23.12.2020
(73) Titulaire: Safran Landing Systems, 78140 Vélizy-Villacoublay (FR)
(72) Inventeur: FERNANDES, Philippe, 77550 MOISSY-CRAMAYEL (FR); FARCY, Marc, 77550 MOISSY-CRAMAYEL (FR); CLEMENT, Christophe, 77550 MOISSY-CRAMAYEL (FR)
(74) Mandataire: Lavialle, Bruno François Stéphane

(56) Documents cités:
- WO-A1-2007/110566
- WO-A1-2014/117248
- FR-A1- 2 963 606

## Description

L'invention concerne le domaine aéronautique et plus particulièrement les atterrisseurs d'aéronef.

### ARRIERE PLAN DE L'INVENTION

Les dispositifs de remorquage d'aéronef viennent s'accrocher ou se fixer au niveau de la partie inférieure orientable de l'atterrisseur auxiliaire de l'aéronef pour tracter, pousser et également faire tourner l'aéronef dans la direction désirée. Une fois ce dernier pris en charge par le dispositif de remorquage, c'est l'opérateur de remorquage qui dirige l'aéronef, la commande d'orientation de l'aéronef étant neutralisée. Ces dispositifs de remorquage sont généralement très maniables et présentent un faible rayon de braquage facilitant les manœuvres de positionnement sous l'aéronef et de déplacement de celui-ci. Il en résulte que l'opérateur de remorquage peut imprimer à la partie orientable de l'atterrisseur auxiliaire une course angulaire importante, pouvant éventuellement aller au-delà d'un seuil angulaire limite autorisé. Dès lors, des dommages irréversibles peuvent être causés à la commande d'orientation si celle-ci est restée mécaniquement connectée à la partie inférieure orientable. La commande d'orientation n'étant pas active lors du remorquage, le déplacement angulaire de la partie inférieure orientable ne peut être ni limité, ni même mesuré, de sorte qu'il est impossible de prévenir l'opérateur de remorquage. Par ailleurs, les effets de cette course angulaire excessive (ou surcourse angulaire) sur la partie inférieure orientable, et notamment sur la commande d'orientation, ne sont pas toujours repérables par un simple contrôle visuel d'un opérateur de maintenance. Par conséquent, à moins d'un examen approfondi de l'atterrisseur nécessitant un démontage partiel de ce dernier, il y a un risque que cette surcourse angulaire ne soit pas détectée et que l'événement reste caché.

Par exemple, sur les aéronefs de type AIRBUS A320, la commande d'orientation présente une course angulaire maximale de plus ou moins 95 degrés autour de la position centrée. Il conviendra de choisir un seuil angulaire limite, par exemple de 92 degrés, pour détecter le risque de surcourse angulaire avant que celle-ci ne conduise à des dégâts potentiels. A cet égard, on a proposé dans le document FR2963606 d'équiper l'atterrisseur d'un dispositif de sécurité qui, selon l'invention comprend des moyens de détection indépendants de la commande d'orientation, permettant de détecter une rotation de la partie inférieure orientable d'un angle égal ou supérieur à un seuil angulaire limite, et des moyens d'alerte générant une alerte en réponse à ladite rotation. En l'occurrence, les moyens de détection décrits comportent un capteur de proximité (par exemple de type électromagnétique ou optique) qui est fixé sur un support solidaire du caisson de l'atterrisseur et qui s'étend en regard d'une piste en arc de cercle qui est solidaire d'une partie inférieure orientable montée pivotante sur le caisson. La piste est relativement fine en son centre, mais s'épaissit depuis le centre vers ses extrémités. Lorsque la partie inférieure orientable reste dans des angles d'orientation courants, le capteur de proximité est trop éloigné de la piste pour que son signal change d'état. Si la partie inférieure est orientée au point d'approcher le seuil angulaire limite, l'épaississement de la piste va induire un rapprochement relatif du capteur de proximité avec la piste, provoquant finalement un changement d'état du signal du capteur de proximité lorsque l'angle d'orientation atteint le seuil angulaire limite. Le changement d'état du signal du capteur permet de détecter l'atteinte du seuil angulaire limite. Un autre mode de réalisation illustré dans ce document concerne des moyens de détection comportant des oreilles portées aux extrémités de la piste pour former un obstacle pour un levier monté basculant sur un support solidaire du caisson pour être basculé depuis une position en saillie vers une position basculée lorsque le levier vient en contact avec l'une des oreilles. Un capteur coopère avec le levier de sorte que son signal change d'état lorsque le levier passe de la position en saillie vers la position basculée.

Cependant, ces dispositifs reposent sur l'utilisation d'un capteur électromagnétique qui peut tomber en panne et donc être inactif au moment de la survenue d'une surcourse angulaire. Ce même document suggère l'utilisation de témoins mécaniques visuels, qui ont l'avantage d'une fiabilité bien plus importante et qui peuvent être vus directement par la personne effectuant le remorquage, ou par le personnel de maintenance. Ce document suggère notamment l'utilisation du levier basculant comme témoin visuel de surcourse lorsqu'il est amené à la position basculée, ou encore de pions fusibles qui sont cassés en cas de surcourse. Cependant, l'information de surcourse est signalée par l'escamotage ou la disparition d'un élément mécanique. Cette information peut ne pas être perçue ou comprise par du personnel peu expérimenté.

### OBJET DE L'INVENTION

L'invention vise à proposer un atterrisseur d'aéronef équipé de moyens d'alerte visuelle dont l'état en cas de surcourse angulaire est susceptible d'être mieux perçu et compris.

### RESUME DE L'INVENTION

En vue de la réalisation de ce but, on propose un atterrisseur d'aéronef comportant une partie haute agencée pour être solidaire de l'aéronef et une partie basse orientable portant des roues et apte à être orientée soit par une commande d'orientation équipant l'atterrisseur soit par un dispositif de remorquage extérieur, l'atterrisseur étant équipé de moyens d'alerte visuelle permettant de signaler une surcourse angulaire correspondant à une rotation de la partie inférieure orientable d'un angle égal ou supérieur à un seuil angulaire limite, les moyens d'alerte visuelle comprenant au moins un témoin visuel monté mobile sur l'une de la partie haute ou de la partie basse orientable de l'atterrisseur entre une première position stable indiquant un fonctionnement normal de l'atterrisseur et une seconde position stable indiquant la survenue d'une surcourse angulaire. Selon l'invention, la première position est une position escamotée invisible et la seconde position est une position sortie visible, le témoin visuel étant poussé de la position escamotée à la position sortie par coopération avec un obstacle monté sur l'autre de la partie haute ou de la partie basse orientable de l'atterrisseur lors d'une surcourse angulaire.

Ainsi, le fonctionnement du témoin visuel est uniquement mécanique et donc très fiable. En outre, la visibilité du témoin visuel indique à coup sûr la survenue d'une surcourse angulaire. Même le personnel peu expérimenté peut se douter que l'apparition d'un témoin visuel non habituellement visible signale un problème nécessitant une action de vérification. De préférence, le témoin visuel est coloré, facilitant sa détection visuelle. Selon un aspect particulier de l'invention, le témoin visuel est associé à des moyens de son verrouillage en position sortie. De la sorte, le témoin visuel ne peut être repoussé en position escamotée. Cette disposition assure que l'information de surcourse angulaire ne puisse être cachée en repoussant le témoin visuel. Une fois l'inspection de la commande d'orientation effectuée, il convient de remplacer le témoin visuel par un autre placé en position escamotée, ou de réarmer le témoin visuel en neutralisant les moyens de verrouillage.

L'invention concerne également un aéronef pourvu d'un tel atterrisseur.

### BREVE DESCRIPTION DES DESSINS

L'invention sera mieux comprise à la lumière de la description qui suit de modes particuliers de réalisation de l'invention, en référence aux figures des dessins annexés parmi lesquelles :
- la figure 1 est une vue en perspective partielle d'un atterrisseur auxiliaire d'aéronef équipé de capteurs mécaniques de surcourse angulaire selon un mode particulier de réalisation de l'invention, les roues étant représentées en position centrée de roulage rectiligne ;
- la figure 2 est une vue en perspective partielle du même atterrisseur, la partie orientable ayant tourné d'un angle proche du seuil angulaire limite ;
- la figure 3 et une vue en coupe d'un des capteurs mécaniques, alors que le témoin visuel est en position escamotée invisible ;
- la figure 4 et une vue en coupe d'un des capteurs mécaniques, alors que le témoin visuel est en position sortie visible.

### DESCRIPTION DETAILLEE DE L'INVENTION

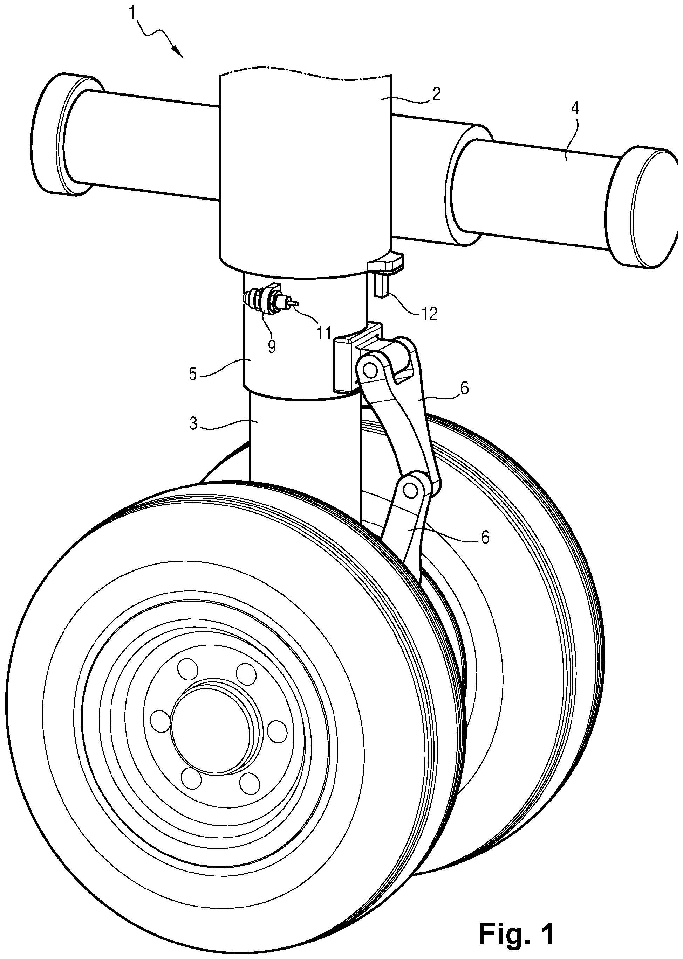

En référence à la figure 1, l'atterrisseur 1 illustré comporte classiquement une partie haute comportant un caisson 2 qui est relié à la structure de l'aéronef, et une partie inférieure orientable 3, portant les roues, qui peut être pivotée pour permettre à l'aéronef de se diriger lors du roulage. La partie inférieure orientable 3 peut être orientée soit par une commande d'orientation 4 disposée sur le caisson 2 pour faire pivoter la partie inférieure orientable 3 en réponse à une consigne d'orientation du pilote, soit par un dispositif de remorquage externe qu'un opérateur vient atteler à la partie inférieure orientable 3. Ici, la partie inférieure orientable 3 comporte un manchon 5 qui est monté pivotant sur le caisson 2 en étant solidaire en rotation des roues par l'intermédiaire d'un compas 6, la commande d'orientation 4 agissant directement sur le manchon 5 (ici par exemple au moyen d'une liaison pignon/crémaillère). Tout ceci est bien connu et n'est rappelé que pour situer le contexte de l'invention.

Selon un mode particulier de réalisation de l'invention, le manchon 5 porte deux capteurs mécaniques 9 comportant chacun un doigt 11 s'étendant en saillie pour coopérer avec un obstacle 12 porté par le caisson 2. Les capteurs sont disposés sur le manchon 5 de part et d'autre de l'obstacle 12 de sorte que les doigts 11 rentrent en contact avec l'obstacle 12 pour un angle de rotation du manchon 5 égal au seuil angulaire limite, ici 90 degrés, de part et d'autre d'une position centrée.

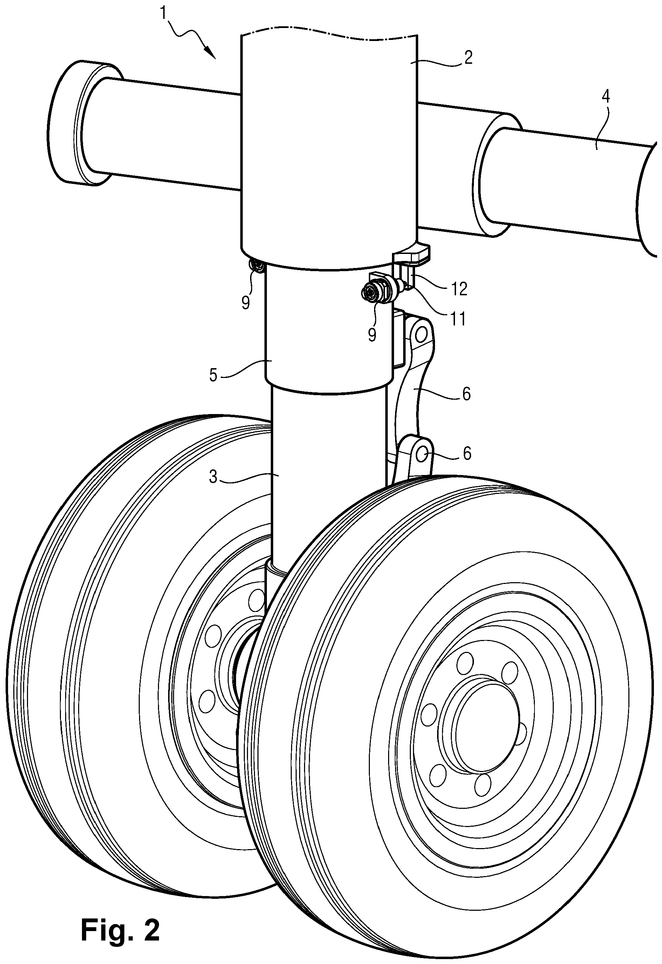

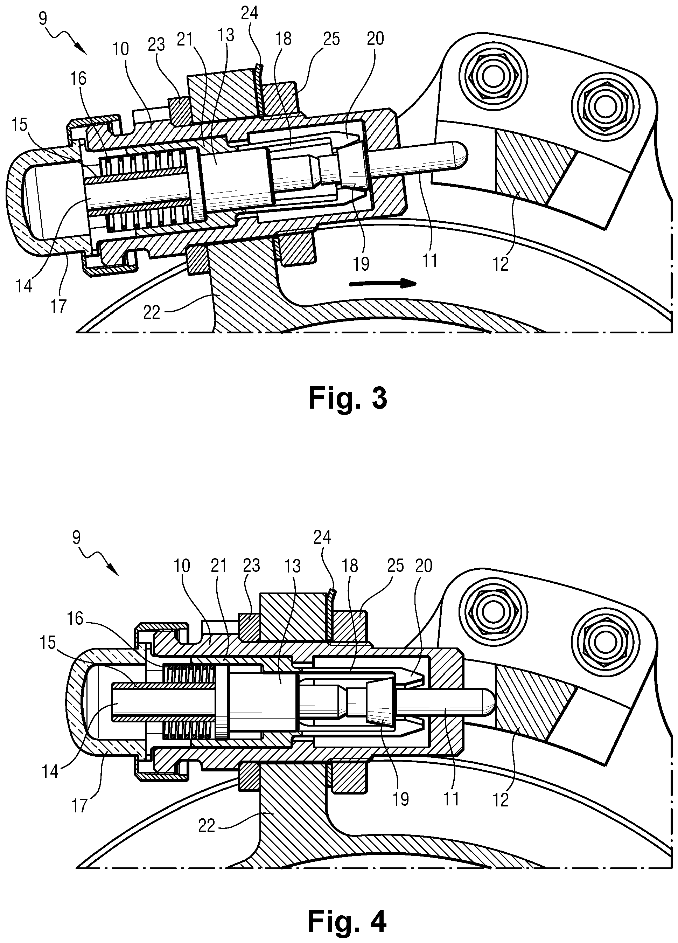

Sur la figure 2 où les roues ont été tournées de 90 degrés, on constate que le doigt 11 de l'un des capteurs mécaniques 9 est venu en appui contre l'obstacle 12. Comme cela est plus précisément visible à la figure 3, chaque capteur mécanique 9 comporte un corps 10 fixé sur un support 22 du manchon 5 (ici un support intégral, mais le support pourrait être rapporté sur le manchon). Pour ce faire, le corps 10 est introduit dans un orifice du support 22 et la position axiale du corps 10 sur le support 22 est réglée finement à l'aide d'une cale de réglage 23 disposée d'un côté du support 22. Le corps est immobilisé sur le support 22 à l'aide d'un écrou 25 vissé sur le corps 10 et bloqué après serrage par une rondelle d'arrêt 24. Le corps 10 contient une chemise 21 dans lequel un coulisseau 13 est monté pour coulisser. Le coulisseau 13 porte à une extrémité le doigt 11, et à l'autre extrémité un témoin visuel 14 ici recouvert d'un fourreau 15 de couleur voyante ou encore peint dans une couleur voyante (par exemple rouge vif ou orange fluorescent ou phosphorescent). Le coulisseau 13 est rappelé par un ressort 16 vers une première position, illustrée à la figure 3, dans laquelle le doigt 11 est en saillie du corps 10 tandis que le témoin visuel 14 est complètement escamoté dans le corps 10, donc invisible. Comme illustré à la figure 4, lorsque le manchon 5 est tourné d'un angle atteignant ou dépassant le seuil angulaire limite, le doigt 11 vient en contact de l'obstacle 12 qui repousse ainsi le coulisseau 13 à l'encontre de l'action du ressort 16 vers une seconde position dans laquelle le témoin visuel 14 est en saillie du corps 10 et donc visible. Un capot transparent 17 permet de protéger le témoin visuel 14 tout en le laissant apparaître de façon parfaitement visible de l'extérieur. Ici la chemise 21 est prolongée de griffes 18 permettant la retenue automatique du coulisseau 13 dans la seconde position, de sorte que cette position est stable et verrouillée. A cet effet, le coulisseau 13 comporte un cône 19 qui, lorsque le doigt 11 est poussé et que le coulisseau 13 transite de la première à la seconde position, écarte les extrémités 20 des griffes 18. Celles-ci se referment sur l'arrière du cône 19 après passage de celui-ci pour verrouiller le coulisseau 13 dans la seconde position à l'encontre de l'action du ressort 16. Une fois les griffes 18 refermées, il est impossible de repousser le témoin visuel 14 dans le corps 10 sans devoir démonter le capteur mécanique 9.

Dans la seconde position, le témoin visuel 14 recouvert de son fourreau de couleur 15 est alors parfaitement visible de l'extérieur, signalant ainsi qu'une surcourse angulaire a eu lieu.

Le seuil angulaire limite est choisi en deçà d'un seuil pour lequel la commande d'orientation risque d'être endommagée. Par exemple, sur les aéronefs de type AIRBUS A320, la commande d'orientation présente une course angulaire maximale de plus ou moins 95 degrés autour de la position centrée. Il conviendra de choisir un seuil angulaire limite inférieur, par exemple de 90 degrés, pour détecter le risque de surcourse angulaire avant que celle-ci ne conduise à des dégâts potentiels.

Le cas échéant, le déplacement du coulisseau 13 de la première position à la seconde position peut être détecté au moyen d'un capteur de déplacement pour générer une signal électrique exploité par des moyens d'alerte selon diverses modalités : un événement peut être mis en mémoire dans un journal d'événements, qui est consulté régulièrement par les équipes de maintenance ; ou si un dispositif de remorquage est attelé à l'atterrisseur, les moyens d'alerte peuvent faire parvenir un signal à l'opérateur, par exemple un signal sonore lui indiquant qu'il a imposé une course angulaire trop importante et qu'il est sur le point d'endommager la commande d'orientation. L'événement peut également être signalé dans le cockpit de l'aéronef, de sorte que le pilote soit immédiatement informé de cet évènement.

L'invention n'est pas limitée à ce qui vient d'être décrit, mais englobe au contraire toute variante entrant dans le cadre défini par les revendications.

En particulier, bien que l'on ait illustré l'invention en application à un atterrisseur auxiliaire muni d'une commande d'orientation, l'invention s'applique à tout atterrisseur pourvu d'une partie inférieure orientable et susceptible d'être attelée à un dispositif de remorquage. Bien qu'ici les témoins visuels soient ici solidaires de la partie basse orientable de l'atterrisseur et l'obstacle solidaire de la partie haute de l'atterrisseur, on pourra bien entendu inverser cette disposition.

De préférence, on utilisera comme ici deux capteurs mécaniques, et donc deux témoins visuels, pour discriminer le sens de la rotation de la partie basse de l'atterrisseur ayant engendré une surcourse angulaire. Cependant, il est possible d'utiliser un unique capteur mécanique sur l'un de la partie haute ou de la partie basse orientable de l'atterrisseur, dont le témoin visuel est poussé de la première position à la seconde position par deux obstacles distincts disposés sur l'autre de la partie haute ou de la partie basse orientable de l'atterrisseur pour pousser le témoin visuel lorsque la partie inférieure orientable atteint le seuil angulaire limite d'un côté ou de l'autre de la position centrée. Enfin, bien que le témoin visuel soit associé à des moyens de son verrouillage en position sortie visible comportant des griffes, on pourra utiliser d'autres moyens de verrouillage, ou s'en passer, ce qui laisse la possibilité de réarmer le témoin en position invisible directement sur l'aéronef.

## Revendications

1. Atterrisseur d'aéronef comportant une partie haute (2) agencée pour être solidaire de l'aéronef et une partie basse orientable (3) portant des roues et apte à être orientée soit par une commande d'orientation (4) équipant l'atterrisseur soit par un dispositif de remorquage extérieur, l'atterrisseur étant équipé de moyens d'alerte visuelle (9) permettant de signaler une surcourse angulaire correspondant à une rotation de la partie inférieure orientable d'un angle égal ou supérieur à un seuil angulaire limite, les moyens d'alerte visuelle comprenant au moins un témoin visuel (14) monté mobile sur l'une de la partie haute ou de la partie basse orientable de l'atterrisseur entre une première position stable indiquant un fonctionnement normal de l'atterrisseur et une seconde position stable indiquant la survenue d'une surcourse angulaire, **caractérisé en ce que** la première position est une position escamotée invisible et la seconde position est une position sortie visible, le témoin visuel étant poussé de la position escamotée à la position sortie par coopération avec un obstacle (12) monté sur l'autre de la partie haute ou de la partie basse orientable de l'atterrisseur lors d'une surcourse angulaire.

2. Atterrisseur selon la revendication 1, dans lequel la position sortie du témoin visuel (14) est une position verrouillée.

3. Atterrisseur selon la revendication 1, dans lequel les moyens d'alerte visuelle comportent au moins un capteur mécanique (9) comportant un corps (10) fixé sur l'une de la partie haute ou de la partie inférieure orientable de l'atterrisseur, le corps (10) recevant un coulisseau (13) portant le témoin visuel et adapté à coulisser entre une première position correspondant à la première position invisible du témoin visuel, et une seconde position correspondant à la seconde position visible du témoin visuel, le coulisseau comportant un doigt (11) adapté à être poussé par l'obstacle (12) pour le faire transiter de la première à la seconde position.

4. Atterrisseur selon la revendication 3, dans lequel le capteur mécanique (9) comporte des moyens de rappel (16) du coulisseau (13) vers la première position.

5. Atterrisseur selon la revendication 3 ou 4, dans lequel le capteur mécanique (9) comporte des moyens de verrouillage (18,19) du coulisseau dans la seconde position, de sorte que la position sortie visible du témoin visuel soit une position verrouillée.

6. Atterrisseur selon la revendication 5, dans lequel les moyens de verrouillage comportent des griffes (18) coopérant avec un cône (19) porté par le coulisseau (13).

7. Atterrisseur selon l'une des revendications 3 à 6, dans lequel le corps (10) porte un capot transparent (17) protégeant le témoin lorsqu'il est en position sortie visible, tout en le laissant visible de l'extérieur.

8. Atterrisseur selon l'une des revendications 3 à 7, dans lequel le témoin visuel est revêtu de couleur voyante (15) .

9. Atterrisseur selon l'une des revendications 3 à 8, dans lequel le corps (10) est fixé sur un support (22)

10. Atterrisseur selon l'une des revendications 3 à 9, comportant deux capteurs mécaniques (9) fixés sur la partie inférieure orientable de l'atterrisseur, les capteurs mécaniques étant disposés de part et d'autre de l'obstacle (12) porté par la partie haute de l'atterrisseur pour coopérer alternativement avec l'un ou l'autre des capteurs mécaniques lorsque la partie inférieure orientable arrive dans une situation de surcourse angulaire de part et d'autre d'une position centrée de la partie inférieure orientable.

11. Aéronef pourvu d'un atterrisseur selon l'une quelconque des revendications précédentes.

## Patentansprüche

1. Luftfahrzeugfahrwerk, umfassend einen oberen Teil (2), der ausgebildet ist, fest mit dem Luftfahrzeug verbunden zu sein, und einen ausrichtbaren unteren Teil (3), der Räder trägt und geeignet ist, entweder durch eine Lenksteuerung (4), mit der das Fahrwerk ausgestattet ist, oder durch eine externe Schleppvorrichtung ausgerichtet zu werden, wobei das Fahrwerk mit visuellen Alarmmitteln (9) ausgestattet ist, die ein Signalisieren einer Winkelüberauslenkung ermöglichen, die einer Drehung des ausrichtbaren unteren Teils um einen Winkel entspricht, der gleich oder größer als ein Winkelgrenzwert ist, wobei die visuellen Alarmmittel mindestens eine visuelle Anzeigevorrichtung (14) umfassen, die an einem Teil aus dem oberem Teil oder dem ausrichtbaren unteren Teil des Fahrwerks zwischen einer stabilen ersten Position, die eine normale Funktionsweise des Fahrwerks anzeigt, und einer stabilen zweiten Position, die das Auftreten einer Winkelüberauslenkung anzeigt, beweglich angebracht ist, **dadurch gekennzeichnet, dass** die erste Position eine unsichtbare eingefahrene Position ist und die zweite Position eine sichtbare ausgefahrene Position ist, wobei die visuelle Anzeigevorrichtung während einer Winkelüberauslenkung von der eingefahrenen Position in die ausgefahrene Position durch Zusammenwirken mit einem Hindernis (12) geschoben wird, das auf dem anderen Teil aus dem oberen Teil oder dem ausrichtbaren unteren Teil des Fahrwerks angebracht ist.

2. Fahrwerk nach Anspruch 1, bei dem die ausgefahrene Position der visuellen Anzeigevorrichtung (14) eine verriegelte Position ist.

3. Fahrwerk nach Anspruch 1, bei dem die visuellen Alarmmittel mindestens einen mechanischen Sensor (9) umfassen, der ein Gehäuse (10) umfasst, das an einem Teil aus dem oberen Teil oder dem ausrichtbaren unteren Teil des Fahrwerks befestigt ist, wobei das Gehäuse (10) einen Schieber (13) aufnimmt, der die visuelle Anzeigevorrichtung trägt und geeignet ist, sich zwischen einer ersten Position, die der unsichtbaren ersten Position der visuellen Anzeigevorrichtung entspricht, und einer zweiten Position, die der sichtbaren zweiten Position der visuellen Anzeigevorrichtung entspricht, zu verschieben, wobei der Schieber einen Finger (11) umfasst, der geeignet ist, von dem Hindernis (12) geschoben zu werden, damit er von der ersten in die zweite Position übergeht.

4. Fahrwerk nach Anspruch 3, bei dem der mechanische Sensor (9) Rückstellmittel (16) zum Rückstellen des Schiebers (13) in die erste Position umfasst.

5. Fahrwerk nach Anspruch 3 oder 4, bei dem der mechanische Sensor (9) Verriegelungsmittel (18, 19) zum Verriegeln des Schiebers in der zweiten Position umfasst, sodass die sichtbare ausgefahrene Position der visuellen Anzeigevorrichtung eine verriegelte Position ist.

6. Fahrwerk nach Anspruch 5, bei dem die Verriegelungsmittel Greifer (18) umfassen, die mit einem Kegel (19) zusammenwirken, der von dem Schieber (13) getragen wird.

7. Fahrwerk nach einem der Ansprüche 3 bis 6, bei dem das Gehäuse (10) eine transparente Abdeckung (17) trägt, die die Anzeigevorrichtung schützt, wenn sie in der sichtbaren ausgefahrenen Position ist, während sie von außen sichtbar bleibt.

8. Fahrwerk nach einem der Ansprüche 3 bis 7, bei dem die visuelle Anzeigevorrichtung mit einer auffälligen Farbe (15) überzogen ist.

9. Fahrwerk nach einem der Ansprüche 3 bis 8, bei dem das Gehäuse (10) an einem Träger (22) befestigt ist.

10. Fahrwerk nach einem der Ansprüche 3 bis 9, umfassend zwei mechanische Sensoren (9), die an dem ausrichtbaren unteren Teil des Fahrwerks befestigt sind, wobei die mechanischen Sensoren zu beiden Seiten des Hindernisses (12) angeordnet sind, das von dem oberen Teil des Fahrwerks getragen wird, um alternativ mit dem einen oder dem anderen der mechanischen Sensoren zusammenzuwirken, wenn der ausrichtbare untere Teil in eine Situation einer Winkelüberauslenkung zu beiden Seiten einer zentrierten Position des ausrichtbaren unteren Teils kommt.

11. Luftfahrzeug, das mit einem Fahrwerk nach einem der vorhergehenden Ansprüche ausgestattet ist.

## Claims

1. An aircraft undercarriage comprising a top portion (2) secured to the aircraft and a steerable bottom portion (3) carrying wheels and suitable for being steered either by a steering control system (4) fitted to the undercarriage or else by an external towing device, the undercarriage being fitted with visual warning means (9) for indicating an angular overstroke corresponding to the steerable bottom portion turning through an angle that is equal to or greater than a limit angle threshold, the visual warning means comprising at least one visual indicator (14) mounted on one of the top and steerable bottom portions of the undercarriage to move between a first stable position indicating normal operation of the undercarriage and a second stable position indicating that an angular overstroke has occurred, the undercarriage being **characterized in that** the first position is a retracted position that is invisible and the second position is an extended position that is visible, the visual indicator being pushed in the event of an angular overstroke from the retracted position to the extended position by cooperating with an obstacle (12) mounted on the other one of the top and steerable bottom portions of the undercarriage.

2. An undercarriage according to claim 1, wherein the extended position of the visual indicator (14) is a locked position.

3. An undercarriage according to claim 1, wherein the visual warning means comprise at least one mechanical sensor (9) comprising a body (10) fastened on one of the top and steerable bottom portions of the undercarriage, the body (10) receiving a slide (13) carrying the visual indicator and adapted to slide between a first position corresponding to the invisible, first position of the visual indicator, and a second position corresponding to the visible, second position of the visual indicator, the slide including a finger (11) adapted to be pushed by the obstacle (12) in order to cause it to pass from the first position to the second position.

4. An undercarriage according to claim 3, wherein the mechanical sensor (9) includes return means (16) for returning the slide (13) towards the first position.

5. An undercarriage according to claim 3 or claim 4, wherein the mechanical sensor (9) includes locking means (18, 19) for locking the slide in the second position, so that the visible, extended position of the visual indicator is a locked position.

6. An undercarriage according to claim 5, wherein the locking means include catches (18) co-operating with a cone (19) carried by the slide (13).

7. An undercarriage according to any one of claims 3 to 6, wherein the body (10) carries a transparent cover (17) protecting the indicator when it is in the visible, extended position, while also leaving it visible from the outside.

8. An undercarriage according to any one of claims 3 to 7, wherein the visible indicator is coated in a striking color (15).

9. An undercarriage according to any one of claims 3 to 8, wherein the body (10) is fastened on a support (22).

10. An undercarriage according to any one of claims 3 to 9, including two mechanical sensors (9) fastened on the steerable bottom portion of the undercarriage, the mechanical sensors being arranged on either side of the obstacle (12) carried by the top portion of the undercarriage so that it co-operates with one or the other of the mechanical sensors when the steerable bottom portion comes into an angular overstroke situation on one side or the other of a center position of the steerable bottom portion.

11. An aircraft provided with an undercarriage according to any preceding claim.
